# EUROPÄISCHE PATENTANMELDUNG

(11) **EP 2 194 342 A2**
(43) Veröffentlichungstag der Anmeldung: **09.06.2010**
(21) Anmeldenummer: 09177947.0
(22) Anmeldetag: 03.12.2009
(51) Int. Cl.: F24J 2/52, E04D 3/36, E04D 12/00, E04D 3/361

(54) **Gleitschuh**

(30) Priorität: 05.12.2008 DE 102008044380; 10.06.2009 DE 102009025946; 10.06.2009 DE 102009025947
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Ein erfindungsgemäßes Montagesystem 1, das beispielsweise auf einem Flachdach 2 angeordnet ist, wird das von einer Dachfolie 3 abgedeckt. Das Montagesystem 1 weist ein Befestigungsprofil 10 auf, das auf der Dachfolie 3 aufliegt und mittels Befestigungsschrauben 4 an der Unterkonstruktion des Flachdachs 2 befestigt ist. An der Oberseite 12, oberhalb eines Folienabschnitts 30, ist ein Gleitschuh 20 befestigt, der in y-Richtung beweglich ein Modulprofil 40 hält, an dem Solarmodule (nicht dargestellt) befestigt werden können.

## Beschreibung

### TECHNISCHES GEBIET

Die vorliegende Erfindung betrifft ein Montagesystem zur Montage von Solarmodulen und eine Anordnung umfassend ein derartiges Montagesystem.

### STAND DER TECHNIK

Der Einsatz von Solarmodulen zur Erzeugung von Strom hat im Angesicht steigender Energiepreise und knapper werdender, nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass Solarmodule mit möglichst geringem technischem Aufwand an geeigneten Stellen aufgebaut und dort effektiv genutzt werden können. Bekanntermaßen werden Solarmodule häufig an Dächern angebracht, da dort die Sonneneinstrahlung ungehindert auf die Solarzellen auftreffen kann.

Problematisch beim Anbringen an Dächern ist dabei, dass eine Beschädigung der Dachabdeckung nach Möglichkeit vermieden werden soll, um ein Eindringen von Feuchtigkeit in die Dachunterkonstruktion zu verhindern. Bei einer Beschädigung der Dachabdeckung sind in der Regel aufwändige Maßnahmen zu treffen, um das Eindringen von Wasser an den beschädigten Stellen zu verhindern.

Darüber hinaus muss ein Montagesystem robust gegen Umwelteinflüsse, Pilzbefall, Temperaturänderungen, etc. sein. So können bei herkömmlichen Montagesystemen Temperaturausdehnungen zu Längenveränderungen einzelner Komponenten führen, die im schlimmsten Fall einen Bruch des Solarmoduls zur Folge haben.

### AUFGABE DER ERFINDUNG

Ausgehend davon ist es die Aufgabe der vorliegenden Erfindung, ein Montagesystem zur Montage von Solarmodulen bereitzustellen, das eine sichere Montage erlaubt und den Bruch von Solarmodulen verhindert.

### TECHNISCHE LÖSUNG

Diese Aufgabe wird gelöst durch ein Montagesystem zur Montage von Solarmodulen gemäß dem Anspruch 1 und eine Anordnung gemäß dem Anspruch 11. Bevorzugte Ausführungsformen der Erfindung ergeben sich aus den Merkmalen der abhängigen Ansprüche.

Ein erfindungsgemäßes Montagesystem zur Montage von Solarmodulen umfasst wenigstens ein Befestigungsprofil zum Anbringen des Montagesystems am Montageort, und wenigstens ein Tragelement, das mit dem Befestigungsprofil verbunden ist und zum Tragen wenigstens eines Solarmoduls ausgebildet ist, zum Anbringen am Befestigungsprofil. Das Tragelement ist als Gleitschuh zur in wenigstens einer Längsrichtung bewegbaren Aufnahme eines Gleitprofils ausgebildet

Das Befestigungsprofil und das Tragelement können einstückig/einteilig ausgebildet oder separate Bauteile sein. Das Befestigungsprofil liegt in der Regel auf dem Untergrund auf. Das Tragelement weist Mittel auf, die die mittelbare oder unmittelbare Befestigung eines Solarmoduls erlauben.

Erfindungsgemäß ist das Tragelement als Gleitschuh zur Aufnahme eines Gleitelements ausgebildet. Das Gleitelement ist beispielsweise ein sich quer oder senkrecht zur Längsrichtung der Befestigungsprofile erstreckendes Modulprofil. Die Oberseite des Tragelements ist bei einer bewegbaren Anordnung des Gleitelements als Gleitfläche ausgebildet. Der Gleitschuh erlaubt einem darin angeordneten Element, beispielsweise einem langgestreckten Modulprofil, eine Bewegung in Längsrichtung auszuführen. Somit kann eine Längenänderung des Modulprofils, beispielsweise verursacht durch Temperaturschwankungen, kompensiert werden. Die Bewegungsrichtung des Modulprofils im Gleitschuh ist in der Regel schräg, insbesondere senkrecht, zur Längsrichtung des Befestigungsprofils ausgerichtet.

In einer besonders bevorzugten Ausführungsform der Erfindung weist das Befestigungsprofil eine Oberseite auf, in der wenigstens eine oder mehrere Aufnahmen für Befestigungsmittel ausgebildet sind. Das Tragelement wird an der Oberseite des Befestigungsprofils angeordnet und mit Schrauben oder Nieten befestigt. Diese können in die dafür vorgesehenen Aufnahmen eingebracht werden.

Vorzugsweise sind die Aufnahmen zum Einbringen von Schrauben und/oder Nieten in die Aufnahmen zur Befestigung des Trägerelements mittels Schrauben bzw. Nieten ausgebildet.

In einer weiteren bevorzugten Ausführungsform der Erfindung kann das Befestigungsprofil wenigstens eine Wasserrille zum Abfluss von der zur Oberfläche des Befestigungsprofils vordringendem Wasser aufweisen.

Vorzugsweise ist die Wasserrille an der Oberseite des Befestigungsprofils ausgebildet.

In einer bevorzugten Ausführungsform der Erfindung kann beidseitig jeweils wenigstens eine Wasserrille seitlich der Aufnahmen an der Oberseite des Befestigungsprofils angeordnet sein. Wenn Wasser durch die Nieten eintritt, erreicht dieses die Befestigungsschrauben für das Befestigungsprofil nicht, sondern wird kontrolliert von den Wasserrillen nach unten abgeführt. Die Gleitschuhe können dann mit Dichtnieten oder Schrauben auf dem zuvor eingeschweißten Träger angenietet werden. Das erhöht erheblich die Dichtigkeit und wäre dann auch laut Norm anerkannt.

Insbesondere weist das Befestigungsprofil wenigstens einen Durchgang für ein Verbindungselement zur Verbindung des Befestigungsprofils am Montageort auf. Das Montagesystem kann somit Verbindungselemente umfassen, beispielsweise Schrauben, mit denen das Befestigungsprofil beispielsweise an einer Unterkonstruktion eines Flach- oder Schrägdachs befestigt ist. Das Montagesystem ist jedoch für eine Befestigung an jeder anderen Konstruktion geeignet, insbesondere jedoch für die Befestigung an Konstruktionen, die wasserdicht abgedichtet werden sollen. Die Befestigungsprofile bzw. Unterträger werden am Dach angeschraubt und dann eingeschweißt.

Vorzugsweise erstreckt sich der wenigstens eine Durchgang von einer im Befestigungsprofil ausgebildeten Vertiefung zur Unterseite des Befestigungsprofils. Die Durchgänge erstrecken sich damit praktisch von Wannen, die in der Oberfläche des Befestigungsprofils ausgebildet sind, zur Unterseite des Profils. Die Befestigungsschrauben werden in die Durchgänge eingeführt, durchdringen die Dachfolie und werden an der Dachunterkonstruktion befestigt. Durch die wannenartigen Vertiefungen ist ein einfaches, zielgenaues und somit rasches Verschrauben der Befestigungsprofile an der Dachunterkonstruktion möglich. Die Schrauben sind rechts und links am Profil unterhalb der Höhe der Vernietung des Gleitschuhs platziert.

Vorzugsweise weist das Befestigungsprofil wenigstens eine Druckkante auf, die im Bereich der Unterseite des Befestigungsprofils ausgebildet ist, wobei die Druckkante zur Ausbildung einer Druckrille zum Abfluss von Wasser von der Auflagefläche des Befestigungsprofils ausgebildet ist. Die Druckkante kann beispielsweise ein Vorsprung sein, der sich von der Unterseite des Befestigungsprofils als Wulst nach unten erstreckt, um eine Rille in der Dachfolie zu formen. Über diese Rille kann Wasser, das trotz der erfindungsgemäßen Abdichtung in den Bereich des Befestigungsprofils eindringt, gezielt in Längsrichtung des Befestigungsprofils abgeführt werden.

Das aufliegende Profil drückt sich rechts und links etwas in die Dachfolie. So wird bei einer etwaigen Undichtigkeit und Wassereintritt durch die Schweißnähte rechts und links das Wasser zum großen Teil an diesen Druckrillen nach unten geführt. Ohne dass es dich Foliendurchdringungen an den Befestigungsschrauben erreichen kann.

Insbesondere ist das Trageelement an der Oberseite des Befestigungsprofils, insbesondere auf der Oberseite des Folienabschnitts aufliegend, angeordnet.

Das Montagesystem kann wenigstens ein Gleitprofil aufweisen, das an einer Oberseite des Tragelements aufliegt.

Das Gleitprofil weist vorzugsweise Halteflansche auf, die durch am Tragelement ausgebildete Halteklammern zum Verhindern eines Abhebens und/oder einer seitlichen Bewegung des Gleitprofils gehalten werden.

Das Tragelement kann einen Grundkörper aufweisen, der eine profilierte Oberseite aufweist.

Das Tragelement weist vorzugsweise einen Grundkörper auf, in dem wenigstens ein Durchgang zur Aufnahme eines Befestigungselements, insbesondere einer Schraube oder Niete, zur Befestigung des Tragelements am Befestigungsprofil ausgebildet ist. Vorzugsweise erstreckt sich der wenigstens eine Durchgang im Grundkörper von in der Oberseite des Grundkörpers ausgebildeten Vertiefungen hindurch zu einer Auflagefläche des Grundkörpers. Die Auflagefläche des Grundkörpers liegt auf der Oberseite des Befestigungsprofils auf.
Die Befestigungsmittel werden durch die Durchgänge geführt, durchdringen den Folienabschnitt und werden in den Aufnahmen, die zu diesem Zweck am Befestigungsprofil vorgesehen sind, befestigt. Beim Befestigen drückt sich vorzugsweise ein Randbereich der Unterseite des Tragelements in den Folienabschnitt ein. Dadurch wird eine Wasserabweisung bzw. eine Abdichtung zum Bereich der Durchgänge für die Befestigungsmittel und den entsprechenden Öffnungen im Folienabschnitt hin erreicht.

In einer besonders bevorzugten Ausführungsform weist der Grundkörper des Tragelements wenigstens eine Vertiefung in der Oberseite des Grundkörpers auf, wobei sich der wenigstens eine Durchgang von der Vertiefung durch den Grundkörper zu einer Auflagefläche des Grundkörpers erstreckt. An der Vertiefung ist der Grundkörper weniger dick als in den benachbarten, erhöhten Bereichen. Das Gleit- oder Modulprofil ist derart angeordnet, dass das Modulprofil die wenigstens eine Vertiefung in der Oberseite des Grundkörpers des Tragelements abdeckt. Damit ist die Modulschiene im Gleitschuh oberhalb der Nieten angeordnet und überdeckt diese Bereiche. So kann kein Wasser von oben auf den Dichtbereich gelangen.

Das Montagesystem kann zudem wenigstens ein Befestigungselement, insbesondere eine Schraube oder Niete, zur Befestigung des Tragelements am Befestigungsprofil aufweisen, wobei das Tragelement einen Grundkörper aufweist, in dem wenigstens ein Durchgang zur Aufnahme des Befestigungselements zur Befestigung des Tragelements am Befestigungsprofil ausgebildet ist. Das Tragelement muss nicht komplett auf dem Unterträger aufliegen. Es kann Einbuchtungen für die Nieten aufweisen. Die Einbuchtungen können später mit einem Dichtstoff ausgefüllt werden oder mit einer Dichtung abgedichtet werden. Dies wäre ein weiterer Dichtigkeitsschutz. Zudem drückt das Tragelement an seinen äußeren Profilflanken auf die Dachfolie. Dadurch wird das Wasser ebenfalls abgewiesen und gelangt nicht mehr zu dem Nietbereich.

Das Montagesystem kann ein Abdichtsystem zur Abdichtung des im Grundkörper des Tragelements ausgebildeten Durchgangs für die Befestigungselemente zur Befestigung des Tragelements am Befestigungsprofil aufweisen.

In einer weiteren bevorzugten Ausführungsform der Erfindung weist das Tragelement wenigstens einen Ablaufkanal auf, der im Bereich eines seitlichen Rands des Grundkörpers ausgebildet ist. Der Ablaufkanal kann beispielsweise eine Vertiefung im Grundkörper sein. In den Tragkörper eindringendes Wasser wird durch die Seitenflansche des Modulprofils in den Außenbereich des Grundkörpers abgelenkt. Über den sich in Längsrichtung (d. h. in Bewegungsrichtung der Modulschiene) erstreckenden Kanäle wird das Wasser gezielt abgeführt. Somit kann es nicht in den Bereich der Durchgänge für die Schrauben bzw. Nieten vordringen. Vorzugsweise weist das Tragelement beidseitig der Durchgangsöffnungen jeweils wenigstens einen Ablaufkanal auf.

In einer bevorzugten Ausführungsform der Erfindung weist das Montagesystem einen Folienabschnitt auf, der wenigstens teilweise zwischen dem Befestigungsprofil und dem Tragelement angeordnet ist. Bei einer Foliendurchdringung der Dachfolie sollte auf der Wasserführenden Ebene eine Mindestaufbauhöhe, beispielsweise von 15cm, realisiert werden, d.h. das Trägerprofil, welches eingeschweißt wird, müsste beispielsweise 15 cm hoch sein. Darauf werden dann Tragelemente oder ein Profil befestigt.

Insbesondere ist der Folienabschnitt seitlich des Befestigungsprofils mit einer Dachfolie, auf der das Befestigungsprofil aufliegt, verschweißt oder auch verklebt sein, insbesondere wasserdicht. Von der ersten seitlichen Schweißnaht ist der Folienabschnitt zur Oberseite des Befestigungsprofils, und zwischen der Oberseite des Befestigungsprofils und der Auflagefläche des Tragelements hindurch zur anderen Seite geführt. Vorzugsweise erstreckt sich der Folienabschnitt auf der anderen Seite nach unten zur Dachfolie und ist dort mit dieser ebenfalls verschweißt. Vorzugsweise ist also der Folienabschnitt beidseitig des Befestigungsprofils wasserdicht mit der Dachfolie verschweißt, um ein Eindringen von Feuchtigkeit zum Befestigungsprofil hin zu verhindern.

Die Aufgabe wird auch gelöst durch eine Anordnung, umfassend wenigstens ein Montagesystem wie oben beschrieben, und wenigstens ein Solarmodul, das am Montagesystem angeordnet ist, wobei das Solarmodul am Gleitprofil befestigt ist derart, dass das Solarmodul gegenüber dem Tragelement wenigstens in einer Längsrichtung bewegbar angeordnet ist.

Das Solarmodul kann mittels Modulklammern am Gleitprofil befestigt sein. Die Modulklammern können so konzipiert sein, dass sie, beispielsweise durch Gummieinsätze, auch eine zur Bewegungsrichtung der Gleitprofile quer oder senkrecht ausgerichtete Längenausdehnung der Module kompensieren können.

Das Solarmodul ist insbesondere zwischen zwei Gleitprofilen angeordnet. Es ist an zwei gegenüberliegenden Seiten mit jeweils einem Gleitprofil fest verbunden.

Die Bewegungsrichtung des Gleitprofils ist vorzugsweise quer, insbesondere senkrecht, zur Längsausdehnung des Befestigungsprofils ausgerichtet.

Insbesondere weist die Anordnung eine Vielzahl parallel zueinander ausgerichteter Befestigungsprofil, und eine Vielzahl parallel zueinander ausgerichteter Gleitprofile auf, die in Tragelementen gleitend gelagert sind.

Vorzugsweise sind das Befestigungsprofil und/oder das Tragelement und/oder das Modulprofil aus Aluminium hergestellt. Zwar können diese Element aus anderen Materialien, beispielsweise aus Holz, bestehen. Durch die Verwendung von Aluminium wird jedoch einerseits eine leichte Bauweise realisiert, andererseits wird das Risiko von Fäulnis und Pilzbefall des eingeschweißten Befestigungsprofils verhindert.

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Figur 1: eine perspektivische Ansicht eines erfindungsgemäßen Montagesystems;
- Figur 2: eine Schnittansicht eines erfindungsgemäßen Tragelements;
- Figur 3: eine Schnittansicht des erfindungsgemäßen Montagesystems in Längsrichtung;
- Figur 4: eine erfindungsgemäße Anordnung von Komponenten des erfindungsgemäßen Montagesystems;
- Figur 5: eine Schnittansicht eines erfindungsgemäßen Tragelements;
- Figur 6: eine weitere Schnittansicht eines erfindungsgemäßen Montagesystems; und
- Figur 7: ein Beispiel für ein Tragelement mit Modulklammern;
- Figur 8: eine seitliche Schnittansicht einer Anordnung gemäß der Erfindung;
- Figur 9: eine Draufsicht auf die Anordnung der Figur 8;
- Figur 10: eine Draufsicht auf eine Solarmodulanordnung gemäß der Erfindung; und
- Figur 11: eine seitliche Schnittansicht einer weiteren Ausführungsform eines Moontagesystems gemäß der Erfindung.

### BESCHREIBUNG BEVORZUGTER AUSFÜHRUNGSBEISPIELE

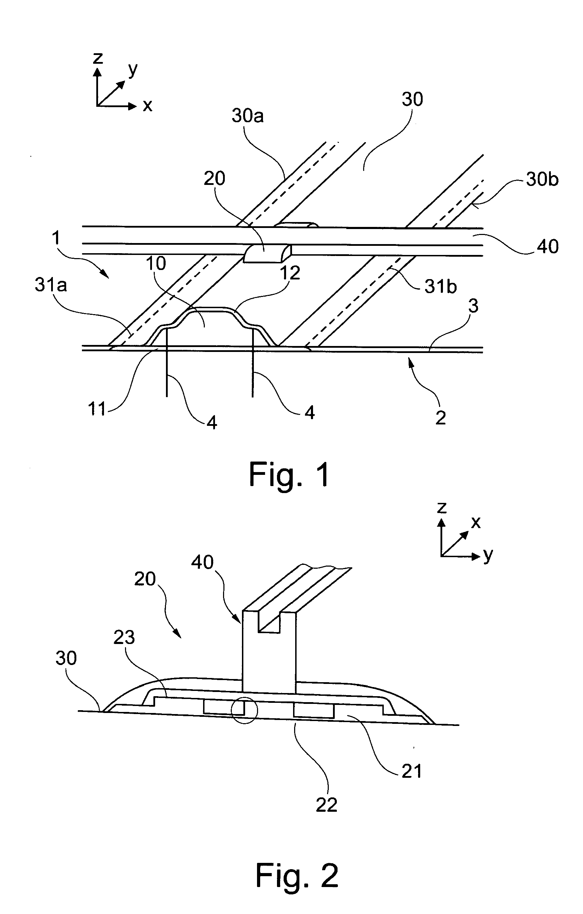

Die Figur 1 zeigt ein erfindungsgemäßes Montagesystem 1, das beispielsweise auf einem Flachdach 2 angeordnet ist, das von einer Dachfolie 3 abgedeckt wird.

Das Montagesystem 1 weist ein Befestigungsprofil 10 auf, dessen Unterseite 11 auf der Dachfolie 3 aufliegt. Das Profil 10 ist mittels Befestigungsschrauben 4 an der Unterkonstruktion des Flachdachs 2 befestigt. Das Befestigungsprofil 10 ist beispielsweise aus Aluminium hergestellt und erstreckt sich entlang einer y-Richtung über das Flachdach 2.

Über die Oberseite 12 des Befestigungsprofils 10 ist ein Folienabschnitt 30 mit seitlichen Rändern 30a, 30b geführt, um das Befestigungsprofil 10 vollständig abzudecken. Der Folienabschnitt 30 ist beidseitig mittels Schweißnähten 31a, 31b mit der darunter liegenden Dachfolie 3 im Bereich der Seitenränder 30a, 30b verschweißt, um ein Eindringen von Wasser zum Befestigungsprofil 10 hin zu verhindern.

An der Oberseite 12, oberhalb des Folienabschnitts 30, ist ein Gleitschuh 20 befestigt, der Modulprofil 40 hält, an dem Solarmodule (nicht dargestellt) befestigt werden können. Das Modulprofil 40 im Gleitschuh 20 ist in x-Richtung beweglich gelagert.

Die Figur 2 zeigt schematisch den Gleitschuh 20 und ein darin bewegbar angeordnetes Modulprofil 40. Der Gleitschuh 20 weist einen Grundkörper 21 mit einer Auflagefläche 22 auf, mit der der Gleitschuh 20 auf dem Folienabschnitt 30 bzw. der darunter liegenden Oberseite 12 des Befestigungsprofils 10 aufliegt.

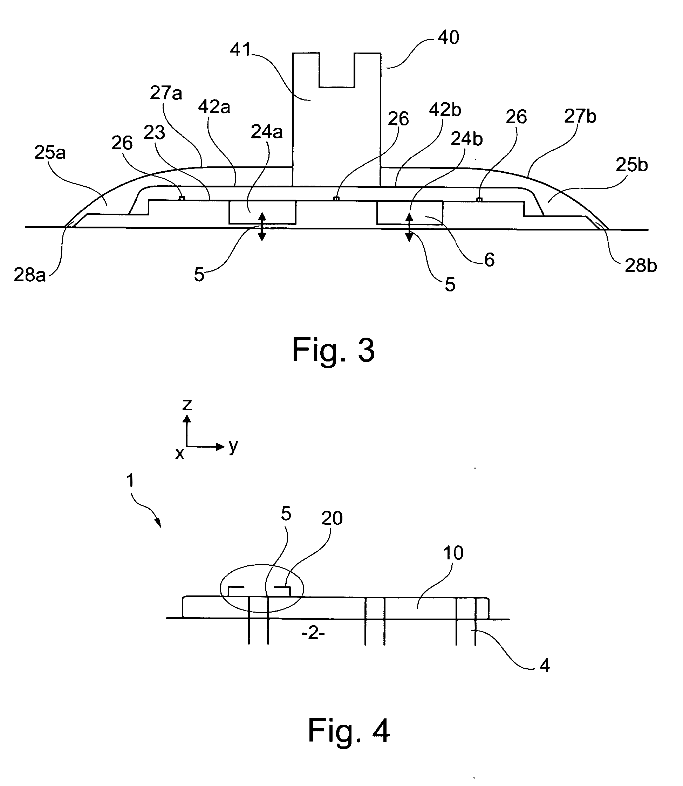

Die Oberseite 23 des Grundkörpers 21 ist, wie aus der Figur 3 deutlich wird, profiliert mit Erhöhungen und dazwischen liegenden Rillen/Vertiefungen 24a, 24b ausgebildet. Von den Vertiefungen aus erstrecken sich Durchbrüche für Nieten 5, mit denen der Gleitschuh 20 am Befestigungsprofil 10 befestigt ist. Die Durchgänge für die Nieten 5 sind durch Dichtstoff, Dichtprofile oder Dichtleisten 6, die in den Vertiefungen 24a, 24b angeordnet sind, abgedichtet, um ein Eindringen von Wasser in den Bereich der Durchgangsöffnungen zu verhindern. Auf den Erhöhungen des Profils 23 sind Gleitelemente 26 angeordnet. Seitlich ist das Profil 23 so ausgebildet, dass Ablaufkanäle 25a, 25b zum Abführen von in diesem Bereich eindringendem Wasser ausgebildet sind.

Außerdem weist der der Gleitschuh 20 an den Seiten des Grundkörpers 21 angeordnete Halteklammer 27a, 27b auf, die das Modulprofil 40 festhalten.

Das Modulprofil 40 umfasst eine Modulschiene 41 sowie seitliche Halteflansche 42a, 42b. Die in den Halteklammern 27a, 27b eingebrachten Halteflansche 42a, 42b halten das Modulprofil 40 im Gleitschuh 20 fest, so dass dieses lediglich in y-Richtung bewegbar ist. In den Gleitschuh 20 eindringendes Wasser wird über die Seitenflansche 42a, 42b zu den Ablaufkanälen 25a, 25b geleitet.

An den seitlichen Enden des Grundkörpers 21 sind zudem Dichtkanten 28a, 28b vorgesehen, die so ausgebildet sind, dass sie sich beim Verschrauben/Vernieten des Gleitschuhs 20 am Befestigungsprofil 10 so in bzw. an die darunter liegende Folie 30 drücken, dass diese Bereiche gegenüber einem Eindringen von Wasser abgedichtet sind.

In der Figur 4 ist das Montagesystem 1 in einer Schnittansicht durch die Ebene yz dargestellt. Das Befestigungsprofil 10 ist mit Schrauben 4 an der Unterkonstruktion des Flachdachs 2 befestigt. Der Gleitschuh 20 ist mit Hilfe von Nieten 5 am Befestigungsprofil 10 befestigt.

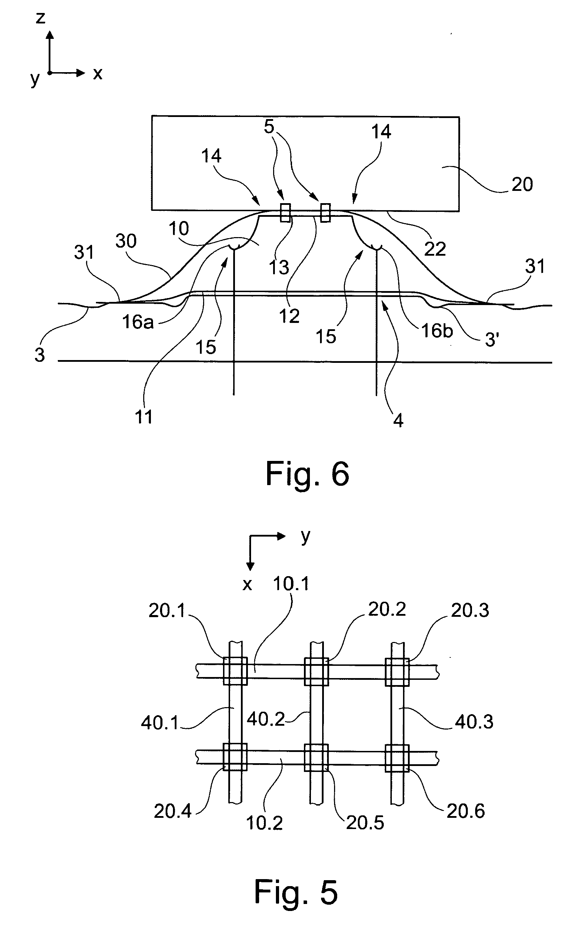

Die Figur 5 zeigt eine Draufsicht auf eine Anordnung von Komponenten des erfindungsgemäßen Montagesystems 1. Auf den Befestigungsprofilen 10.1 und 10.2 sind beabstandet zueinander Gleitschuhe 20.1, 20.2, 20.3, 20.4, 20.5, 20.6, ... befestigt. In einer Reihe von Gleitschuhen 20.1, 20.4; 20.2, 20.5; bzw. 20.3, 20.6 sind jeweils Profilschienen 40.1, 40.2 bzw. 40.3 in y-Richtung bewegbar gelagert. Die Profilschienen 40.1, 40.2 und 40.3 sind an einem Ende und/oder mittig ortsfest gelagert (nicht dargestellt).

Die Figur 6 zeigt ein Befestigungsprofil 10 mit einem darauf befestigten Gleitschuh 20 in einer Schnittansicht in der Ebene xz. Eine Folie 30 ist über das Befestigungsprofil 10 geführt und beidseitig mittels Schweißnähten 31 an der Dachfolie 3 befestigt. Der Folienabschnitt 30 erstreckt sich abschnittsweise zwischen der Oberseite 12 des Befestigungsprofils 10 und der Unterseite 22 des Gleitschuhs 20.

Der Querschnitt des Befestigungsprofils 10 verringert sich von der Unterseite 11 zur Oberseite 12 hin, um den Folienabschnitt 30 einfach über dem Befestigungsprofil 10 anordnen zu können. Die Kanten im Querschnittsprofil sind abgerundet, so dass die Gefahr einer Beschädigung des Folienabschnitts 30 möglichst verhindert wird.

An der Oberseite 12 des Befestigungsprofils 10 sind Aufnahmen 13 für Dichtnieten 5 zur Befestigung des Gleitschuhs 20 ausgebildet. Außerdem weist das Befestigungsprofil 10 seitlich von den Aufnahme 13 angeordnete Wasserrillen 14 auf, die sich in y-Richtung erstrecken, um auf die Oberseite 12 des Befestigungsprofils 10 gelangendes Wasser entlang der y-Richtung des Profils 10 abzuführen.

Seitlich von der Oberseite 12 und tiefer gelegen sind beidseitig Wannen 15 ausgebildet, von denen sich Durchgänge für die Befestigungsschrauben 4 zur Unterseite 11 des Befestigungsprofils 10 erstrecken.

An der Außenseite der Unterseite 11 des Befestigungsprofils 10 sind beidseitig Druckkanten 16a, 16b am Befestigungsprofil 10 ausgebildet. Diese können beispielsweise als Wulste ausgebildet sein, die sich in y-Richtung erstrecken und leicht über die Unterseite 11 des Befestigungsprofils 10 nach unten hervorstehen. Die Druckkanten 16a, 16b bilden somit in der Dachfolie 3 Druckrillen bzw. Wasserrillen 3' aus, über die unter den Folienabschnitt 30 eindringendes Wasser entlang der Dachfolie 3 in y-Richtung abgeführt werden kann. Auf diese Weise wird verhindert, dass Wasser in den Bereich der Durchgangsöffnungen für die Befestigungsschrauben 4 in der Dachfolie 3 gelangt.

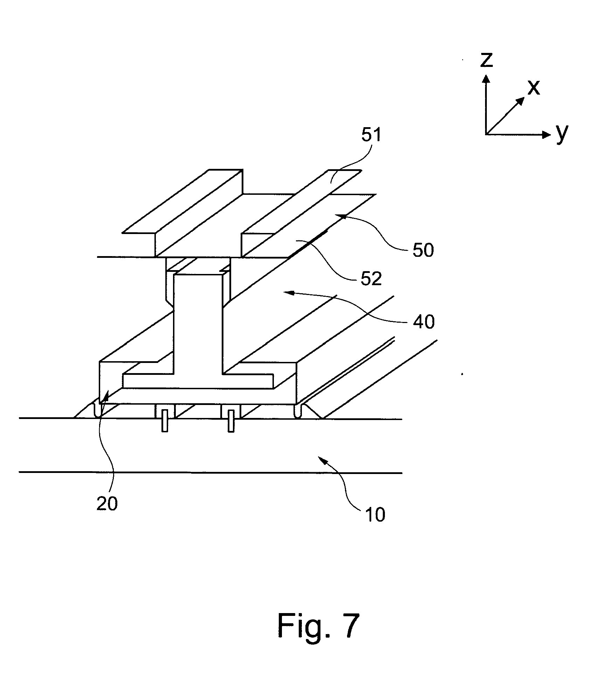

In der Figur 7 ist ein Beispiel für einen Gleitschuh 20 mit einer daran angeordneten Modulschiene 40 dargestellt. An der Modulschiene 40 sind Modulhalterungen bzw. - klammern 50 aufgeclipst. Wahlweise können die Klammern 50 zusätzlich verschraubt werden. Die Modulklammern 50 können jedoch, insbesondere ohne zusätzliche Befestigung, einfach angebracht und entlang der Längsachse der Modulschiene 40 in den Clipsrillen verschoben werden. Dadurch wird Montagezeit eingespart.

Die Solarmodule werden in den Zwischenraum zwischen den Schenkeln 51 und 52 der Modulklammer 50 eingeführt und in y-Richtung fixiert, so dass sie fest in der Klammer 50 gehalten werden. Der Modulclip 51, 52 kann eine nur kurze Länge (x-Richtung) von ca. 80 mm aufweisen, so dass zwei oder mehrere Modulclips 51, 52, die entlang der Modulschiene 40 angeordnet sind, eine Kante eines Solarmoduls praktisch in Form punktförmiger Auflagen halten. Dadurch wird ein Entlüften der warmen Luft, die sich unter den Solarmodulen staut, nach außen ermöglicht.

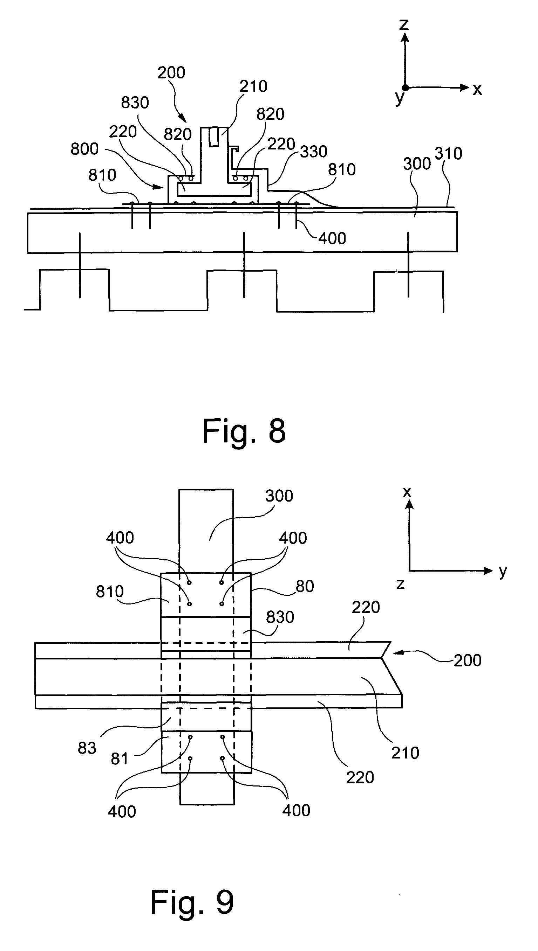

Die Figur 8 zeigt ein weiteres Ausführungsbeispiel eines erfindungsgemäßen Modulprofils 200. Dieses weist eine Profilschiene 210 auf, von deren unteren Ende sich senkrecht beidseitig Führungsflansche 220 erstrecken. Anders als bei den bisherigen Ausführungsbeispielen ist das Modulprofil 200 nicht über die Seitenflansche 220 direkt mit dem Unterträger 300 verbunden. Vielmehr weist das Befestigungssystem 1 einen Gleitschuh 800 auf, der die Seitenflansche 220 des Modulprofils 200 durch die Vorsprünge 830 klammerartig umgreift und das Modulprofil 200 so vor einem Abheben vom Gleitschuh 800 stabilisiert.

Der Gleitschuh 800 weist sich lateral beidseitig erstreckende Seitenflansche 810 auf, die mittels Befestigungsschrauben 400 an der Holzbohle 300 befestigt sind. Die Seitenflansche 810 liegen auf Folie 310 auf, die die Holzbohle 300 umschließt. Eine weitere Folie 330 kann sich über die Seitenflansche 810 erstrecken und so ein Eindringen von Feuchtigkeit in den Bereich der Befestigungsschrauben 400 verhindern.

Innerhalb des Gleitschuhs 800 sind Gleitführungen 820 angeordnet, die ein Gleiten des Modulprofils 200 in Längsrichtung (y-Richtung) der Modulschiene 230 ermöglichen. Die Modulschiene 230 kann sich somit kontrolliert in y-Richtung im Gleitschuh 800 bewegen. Die Modulprofile 200 werden an einem definierten Fixpunkt befestigt und können sich so einseitig oder zweiseitig relativ zum Fixpunkt ausdehnen. Die Gleitmechanik für Solarmodule dient zur kontrollierten Längenausdehnung bei Glaslaminaten, insbesondere bei Solarmodulen ohne Rahmen, und beim Einsatz relativ langer Modulschienen. Auf diese Weise wird verhindert, dass unkontrollierte Längenausdehnungen beispielsweise aufgrund von Temperaturschwankungen, in den Aufnahmen 520, 530 angeordnete Auflagegummis seitlich aus diesen herausschieben. Außerdem wird die Gefahr des Glasbruchs verhindert.

Im Rahmen der Montage kann der Gleitschuh 800 separat auf die Holzbohle 300 angeschraubt werden. Anschließend werden die Modulprofile 200 eingeführt. Die Modulprofile 200 können jedoch auch bereits vor der Montage des Gleitschuhs 800 in diesen eingeführt worden sein.

Die Figur 9 zeigt die Ausführungsform der Figur 8 in einer Draufsicht. Der Gleitschuh 800 befindet sich im Bereich einer Holzbohle 300 und ist mittels Befestigungsschrauben 4 über die beiden Seitenflansche 810 beidseitig mit der Holzbohle 300 verschraubt.

Im Gleitschuh 800 ist ein Modulprofil 200 mit einer Profilschiene 210 und Seitenflanschen 220 in y-Richtung bewegbar angeordnet. Ein Abheben des Modulprofils 200 wird durch ein Übergreifen der Seitenflansche 220 durch Vorsprünge 83 des Gleitschuhs 80 verhindert, während das obere Ende der Modulschiene 230 aus der zwischen den Enden der Haltevorsprünge 830 begrenzten Öffnung herausragt.

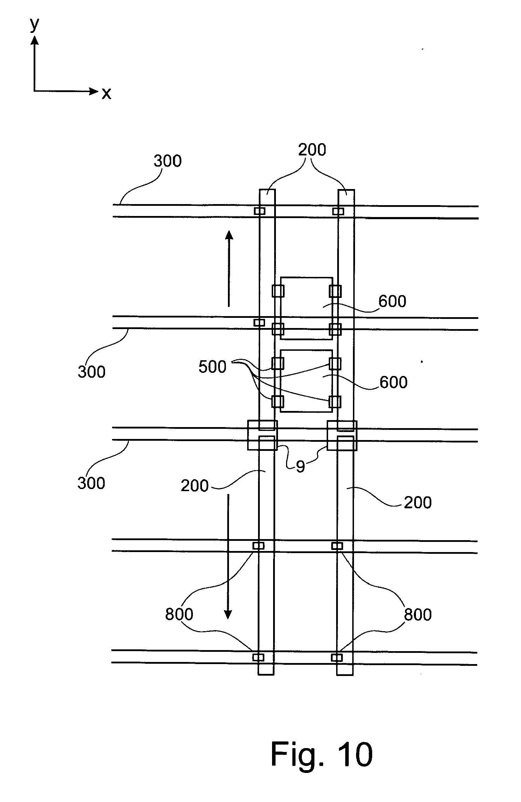

In der Figur 10 ist eine erfindungsgemäße Modulanordnung dargestellt. Die Module 600 sind mit jeweils vier Aufnahmeelementen 500 pro Modul an parallel zueinander angeordneten Modulprofilen 200 befestigt. Die Modulprofile 200 sind senkrecht zu parallel zueinander angeordneten Bohlen 300 ausgerichtet.

Zur bewegbaren Halterung der Modulprofile 200 sind jeweils Aufnahmeelemente 500, wie in den Figuren 8 und 9 dargestellt, vorgesehen. Im dargestellten Ausführungsbeispiel sind die Modulprofile 200 an Fixpunkten 9 fest angeordnet, so dass sie sich in einer Richtung vom Fixpunkt aus ausdehnen können.

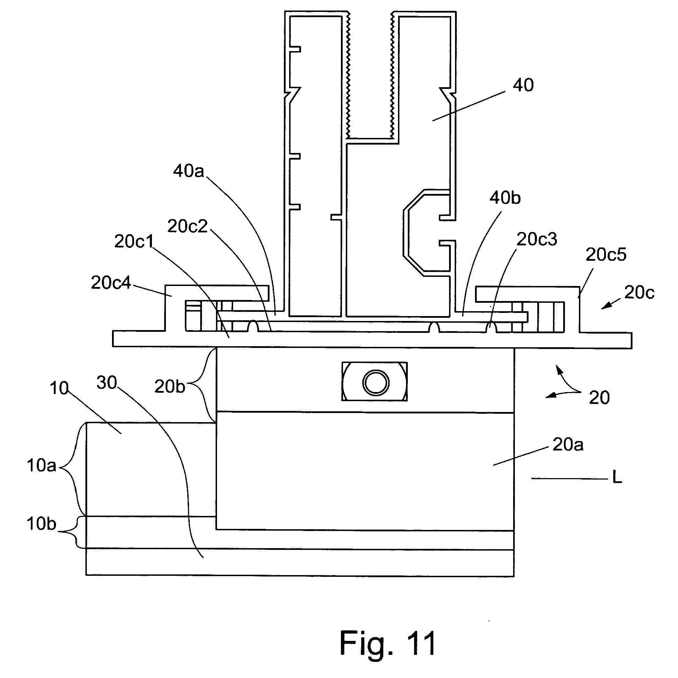

Die Figur 11 zeigt eine weitere Ausführungsform eines Montagesystems 1 gemäß der Erfindung.

Das Montagesystem 1 umfasst ein Befestigungsprofil 10, das unterhalb einer Dachfolie 30 liegt und von dieser umschlossen wird. Das Befestigungsprofil 10 ist so ausgebildet, dass ein oberer Bereich 10a gegenüber einem Zwischenbereich 10b entlang der Längsrichtung L so aufgeweitet ist, dass eine Klammer formschlüssig am Profil 10 befestigt werden kann.

In dieser Ausführungsform weist das Montagesystem eine Gleitschuhkonstruktion 20 auf, die im Wesentlichen aus einer Klammer 20a, einem Zwischenbereich 20b und dem eigentlichen Gleitschuh 20c besteht. Die Klammer 20a ist an den oberen Bereich 10a des Befestigungsprofils 10 angeklammert, d.h. formschlüssig mit diesem verbunden. Somit bleibt die Dachfolie 30 unbeschädigt. Der Zwischenbereich 20b verbindet die Klammer 20a mit dem Gleitschuh 20c. Im Gleitschuh 20c ist eine Modulschiene 40 aufgenommen, die senkrecht zur Zeichenebene bewegbar angeordnet ist.

Der Gleitschuh 20c weist einen Grundkörper 20c1 mit einer Oberseite 20c2 auf. Die Oberseite 20c2 des Grundkörpers 20c1 ist profiliert mit Erhöhungen 20c3 zur Auflage der Modulschiene 40 ausgebildet. Außerdem weist der der Gleitschuh 20c an den Seiten des Grundkörpers 20a angeordnete Halteklammer 20c4 und 20c5 auf, die das Modulprofil 40 festhalten, indem sie beidseitig jeweils einen Flansch 40a, 40b umklammern, so dass das Modulprofil 40 nur in einer Richtung bewegt werden kann.

Durch den Einsatz der Gleitschuhkonstruktion können Schwankungen in der Ausdehnung der einzelnen Komponenten des Montagesystems und der Solarmodule ausgeglichen werden.

Insgesamt bietet das Montagesystem eine sichere und zuverlässige Befestigung von Solarmodulen an einem Dach sowie einen zuverlässigen Schutz vor dem Eindringen von Wasser in die Dachunterkonstruktion.

## Patentansprüche

1. Montagesystem (1) zur Montage von Solarmodulen, umfassend:
wenigstens ein Befestigungsprofil (10) zum Anbringen des Montagesystems (1) an einem Montageort; und
wenigstens ein Tragelement (20), das mit dem Befestigungsprofil (10) verbunden ist und zum Tragen wenigstens eines Solarmoduls ausgebildet ist,
**dadurch gekennzeichnet, dass**
das Tragelement (20) als Gleitschuh zur in wenigstens einer Längsrichtung bewegbaren Aufnahme eines Gleitprofils (40) ausgebildet ist.

2. Montagesystem (1) nach Anspruch 1,
**dadurch gekennzeichnet, dass**
das Tragelement (20) an der Oberseite (12) des Befestigungsprofils (10) angeordnet ist.

3. Montagesystem (1) nach Anspruch 1 oder 2,
**dadurch gekennzeichnet, dass**
das Montagesystem (1) wenigstens ein Gleitprofil (40) aufweist, das an einer Oberseite (23) des Tragelements (20) aufliegt.

4. Montagesystem (1) nach Anspruch 3,
**dadurch gekennzeichnet, dass**
das Gleitprofil (40) Halteflansche (42a, 42b) aufweist, die durch am Tragelement (20) ausgebildete Halteklammern (27a, 27b) zum Verhindern eines Abhebens und/oder einer seitlichen Bewegung des Gleitprofils (40) gehalten werden.

5. Montagesystem (1) nach einem der vorhergehenden Ansprüche,
**dadurch gekennzeichnet, dass**
das Tragelement (20) einen Grundkörper (21) aufweist, der eine profilierte Oberseite (23) aufweist.

6. Montagesystem (1) nach Anspruch 5,
**dadurch gekennzeichnet, dass**
der Grundkörper (21) des Tragelements (20) wenigstens eine Vertiefung (24a, 24b) in der Oberseite (23) des Grundkörpers (21) aufweist, wobei sich der wenigstens eine Durchgang von der Vertiefung (24a, 24b) durch den Grundkörper (21) zu einer Auflagefläche (22) des Grundkörpers (21) erstreckt.

7. Montagesystem (1) nach einem der vorhergehenden Ansprüche,
**dadurch gekennzeichnet, dass**
das Montagesystem (1) wenigstens ein Befestigungselement (5), insbesondere eine Schraube oder Niete (5), zur Befestigung des Tragelements (20) am Befestigungsprofil (10) aufweist, wobei das Tragelement (20) einen Grundkörper (21) aufweist, in dem wenigstens ein Durchgang zur Aufnahme des Befestigungselements zur Befestigung des Tragelements (20) am Befestigungsprofil (10) ausgebildet ist.

8. Montagesystem (1) nach einem der Ansprüche 5 bis 7,
**dadurch gekennzeichnet, dass**
das Montagesystem (1) ein Abdichtsystem zur Abdichtung des im Grundkörper (21) des Tragelements (20) ausgebildeten Durchgangs für die Befestigungselemente zur Befestigung des Tragelements (20) am Befestigungsprofil (10) aufweist.

9. Montagesystem (1) nach einem der vorhergehenden Ansprüche,
**dadurch gekennzeichnet, dass**
das Montagesystem (1) einen Folienabschnitt (30) aufweist, der wenigstens teilweise zwischen dem Befestigungsprofil (10) und dem Tragelement (20) angeordnet ist.

10. Montagesystem (1) nach Anspruch 9,
**dadurch gekennzeichnet, dass**
der Folienabschnitt (30) mit einer Dachfolie (3) seitlich des Befestigungsprofils (10) verschweißt ist.

11. Anordnung, umfassend wenigstens ein Montagesystem (1) gemäß einem der vorhergehenden Ansprüche, und wenigstens ein Solarmodul (600), das am Montagesystem (1) angeordnet ist, wobei das Solarmodul (600) am Gleitprofil (40) befestigt ist derart, dass das Solarmodul (600) gegenüber dem Tragelement (20) wenigstens in einer Längsrichtung bewegbar angeordnet ist.

12. Anordnung nach Anspruch 11,
**dadurch gekennzeichnet, dass**
das Solarmodul (600) mittels Modulklammern (500) am Gleitprofil (40) befestigt ist.

13. Anordnung nach Anspruch 11 oder 12,
**dadurch gekennzeichnet, dass**
das Solarmodul (600) zwischen zwei Gleitprofilen (40) angeordnet ist.

14. Anordnung nach einem der Ansprüche 11 bis 13,
**dadurch gekennzeichnet, dass**
die Bewegungsrichtung des Gleitprofils (40) quer, insbesondere senkrecht, zur Längsausdehnung des Befestigungsprofils (10) ausgerichtet ist.

15. Anordnung nach einem der Ansprüche 11 bis 14,
**dadurch gekennzeichnet, dass**
die Anordnung eine Vielzahl parallel zueinander ausgerichteter Befestigungsprofil (10), und eine Vielzahl parallel zueinander ausgerichteter Gleitprofile (40) aufweist, die in Tragelementen (20) gleitend gelagert sind.
